**Europäisches Patentamt**

**European Patent Office**

**Office européen des brevets**

(19)

(11) Veröffentlichungsnummer: **0 019 709**
**A1**

(12) # EUROPÄISCHE PATENTANMELDUNG

(21) Anmeldenummer: 80101937.3

(22) Anmeldetag: 10.04.80

(51) Int. Cl.³: **H 04 N 3/14**, G 02 F 1/133

(30) Priorität: 28.04.79 DE 2917322

(43) Veröffentlichungstag der Anmeldung: 10.12.80
Patentblatt 80/25

(84) Benannte Vertragsstaaten: AT CH FR GB LI NL SE

(71) Anmelder: **BROWN, BOVERI & CIE Aktiengesellschaft**
**Mannheim, Kallstadter Strasse 1, D-6800 Mannheim**
**Käfertal (DE)**

(84) Benannte Vertragsstaaten: **FR NL SE AT**

(71) Anmelder: **BBC Brown, Boveri & Cie.**
**(Aktiengesellschaft), CH-5401 Baden (CH)**

(84) Benannte Vertragsstaaten: **CH GB LI**

(72) Erfinder: **Fischer, Albrecht, Dr. Prof., Preinstrasse 132,**
**D-4600 Dortmund 30 (DE)**
Erfinder: **Frobenius, Wolf D., Dipl.-Ing., Im Wietloh 36,**
**D-5840 Schwerte 4 (DE)**

(74) Vertreter: **Kempe, Wolfgang, Dr. et al, c/o Brown, Boveri**
**& Cie AG Postfach 351, D-6800 Mannheim 1 (DE)**

(54) Schaltungsanordnung zur Ansteuerung einer Informationsanzeigeplatte.

(57) Eine matrixartig aufgebaute Informationsanzeigeplatte besteht aus einem Raster von spannungserregbaren Kondensatoren ($C_{CL}$) als Bildpunkte. Jedem Bildpunkt wird die Videoinformation durch Zeilen- und Spaltenleitungen zugeführt. Zur Umsetzung der Videoinformation in optische Signale ist jedem Bildpunkt ein Feldeffekt-Transistor (4) zugeordnet, dessen Steuerelektrode mit einer Zeilenleitung und dessen Hauptelektroden mit einer Spaltenleitung bzw. mit dem Bildpunkt-Kondensator ($C_{LC}$) verbunden sind. Bei der Übertragung der Videoinformation in eine entsprechende Zeile der Anzeigeplatte erfolgt eine Zwischenspeicherung des Videosignals mittels der an jedem Kreuzungspunkt einer Zeile mit einer Spalte vorhandenen Kreuzungskapazität ($C_{CROSS}$). Ein hierzu üblicherweise eingesetzter eigener Zeilenspeicherkondensator und Zeilenschalter entfällt. Nach beendetem «Einlesen» der Videoinformation in die entsprechende Zeile erfolgt eine gleichzeitige Umladung der Kreuzungskondensatoren ($C_{CROSS}$) in die Bildpunkt-Kondensatoren ($C_{LC}$) über die durchgesteuerten Feldeffekt-Transistoren (4). Die weiteren Zeilen werden danach in gleicher Weise angesteuert, wobei ein flackerfreies, augenschonendes Bild erhalten wird.

0019709

B R O W N , B O V E R I  &  C I E      AKTIENGESELLSCHAFT
Mannheim                               25. April 1979
Mp.-Nr. 553/79                         ZFE/P3-Pn/Bt

## Schaltungsanordnung zur Ansteuerung einer Informationsanzeigeplatte.

Die Erfindung bezieht sich auf eine Schaltungsanordnung gemäß dem Oberbegriff des Hauptanspruches.

Die Erfindung kann Anwendung finden für flache Farbfernseh-Schirme mit Dreifarbenemission, ebenso für Displays bzw. Anzeigetafeln von Kraftwerkleitständen, als Anzeigeeinheit für Meßgeräte etc..

Der innere Aufbau einer Informationsanzeigeplatte ist vom Erfinder in "Electronic Letters" vom 8. Jan. 1976 beschrieben worden. Für eine TV-Bildinformation ist eine Schaltungsmatrix notwendig, deren Aufbau aus der US-PS 38 40 695 bekannt ist, bzw. aus der DE-OS 27 37 269.

Flache Informationsanzeigen, die als Bildschirmschaltkreise eine Dünnfilm-Transistor-Matrix verwenden, erhalten, wie aus

0019709

der US-PS 41 43 297 bekannt ist, die Bildinformation in paralleler Form, jeweils eine Video-Zeile nach der anderen, über die Spaltendrähte zugeführt. Dies erfordert eine Umwandlung der vom Fernsehsender seriell ankommenden Bildinformation in die Parallelform. Üblicherweise wird dabei eine Video-Zeile zunächst auf einen Zeilenspeicher, der soviel Speicherkondensatoren hat, wie Spaltendrähte vorhanden sind, zwischengespeichert. Hierauf werden die Speicherkondensatoren über einen Zeilenschalter während der Zeit, die eigentlich für den "Flyback" des Elektronenstrahls bei der Röhre vorgesehen ist, über die Logik-Dünnfilm-Transistoren in die Bildpunktspeicherkondensatoren einer vom vertikalen Schieberegister angewählten Zeile entladen.

Die dabei auftretende Ladungsteilung zwischen dem Zeilenspeicherkondensator und dem Bildpunktspeicherkondensator macht es notwendig, daß die Kapazität des Zeilenspeicherkondensators gegenüber der des Bildpunktspeicherkondensators groß genug gemacht wird, um Signalverluste durch die Ladungsteilung zu vermeiden. Da die Spaltendrähte in jedem Kreuzungspunkt der matrixartigen Informationsanzeigeplatte kapazitiv mit den Zeilendrähten ungewollt gekoppelt sind, müssen diese parasitären Kapazitäten ebenfalls von der Ladung des Zeilenspeicherkondensators mit aufgeladen werden, wodurch sich die Signalübertragung weiter verschlechtert. Auch können die Dünnfilm-Transistoren diese hohen Ladeströme nicht mehr schalten.

Diesen negativen Einfluß der Koppelkapazitäten könnte man vermindern, wenn man den Zeilenspeicherkondensator entsprechend vergrößert oder die Kreuzungskapazitäten durch eine dickere Isolationsschicht verkleinert. Beide Möglichkeiten sind jedoch praktisch nicht anwendbar. Die Fläche für die Zeilenspeicherkondensatoren ist begrenzt, und die dickere Isolationsschicht ist schlecht aufzudampfen (Wärmewirkung).

Der Erfindung liegt die Aufgabe zugrunde, eine Schaltungsanordnung für die gattungsgemäße Informationsanzeigeplatte zu entwickeln, die den negativen Einfluß der parasitäten Kreuzungskapazitäten ausscheidet.

Die Lösung der Aufgabe ergibt sich aus dem kennzeichnenden Teil des Hauptanspruches.

Die mit der Erfindung verbundenen Vorteile bestehen insbesondere darin, daß die sonst üblichen gesonderten Zeilenspeicherkondensatoren und die notwendigen Zeilenschalter eingespart werden.

Durch die Eliminierung des Zeilenspeichers und -schalters kann die Matrix also leicht mit abwechselnd positiven und negativen Video-Signalen beaufschlagt werden, was beispielsweise für die Flüssigkristallanzeige zur Erzielung einer hinreichend großen Lebensdauer notwendig ist und zudem das Driftproblem der Dünnfilm-Transistoren in diesem speziellen Anwendungsfall unwirksam macht.

Weitere vorteilhafte Ausgestaltungen der Erfindung ergeben sich aus den Unteransprüchen und der sich anschließenden Beschreibung.

Zur Erläuterung der zum Verständnis vorliegender Erfindung notwendigen Grundlagen wird auf die US-PS 41 43 297 verwiesen, bzw. auf die DE-OS 27 37 269.

Die Erfindung wird nachfolgend anhand des in den Zeichnungen dargestellten Ausführungsbeispieles näher beschrieben.

Es zeigen:

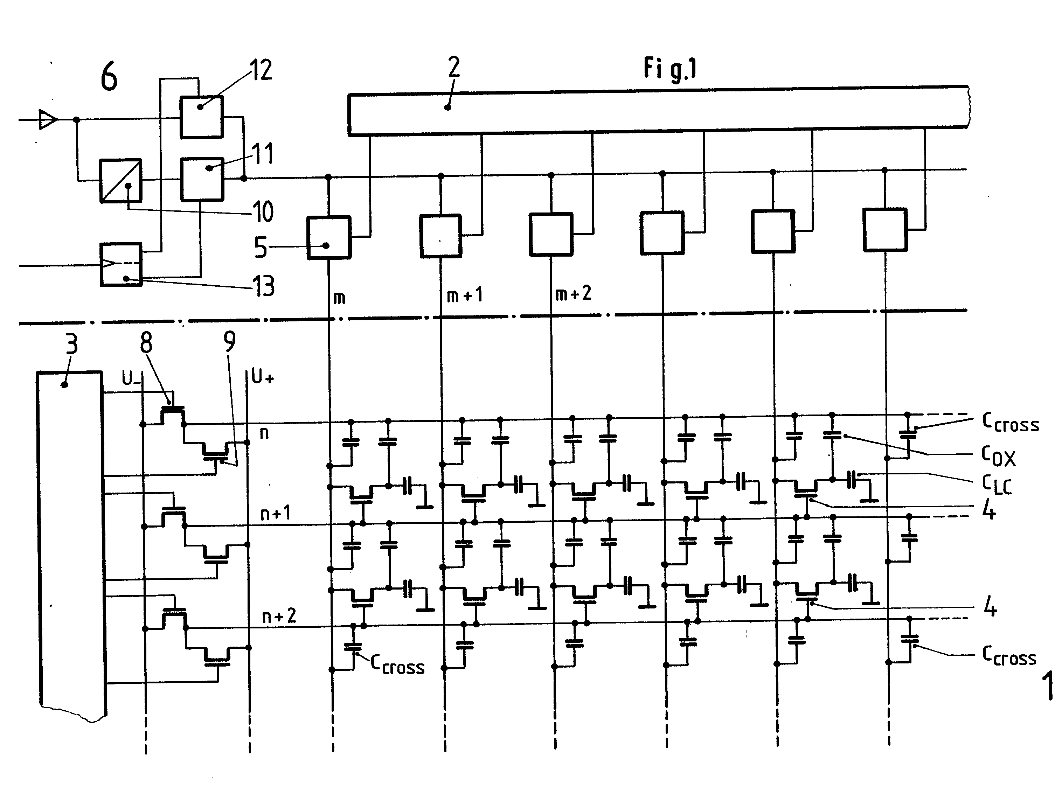

Fig. 1    den prinzipiellen Schaltungsaufbau einer Informationsanzeigeplatte,
Fig. 2    einen einzelnen Elementar-Schaltkreis.

Im Bild 1 ist der prinzipielle Schaltungsaufbau des Bild-schirmschaltkreises einer Informationsanzeigeplatte darge-stellt. Mit Bezugsziffer 1 ist der das Bild ausstrahlende XY-Teil der Matrix bezeichnet. Als periphere Adressier-Schaltkreise zur Ansteuerung des XY-Teils 1 sind ein schnel-les Horizontal-Schieberegister 2 sowie ein langsames Vertikal-Schieberegister 3 vorgesehen.

Der XY-Teil 1 selbst besteht aus einer Vielzahl von Elementar-Speicher-Schaltkreisen, die in Matrixform angeordnet und miteinander verbunden sind. Jeder Elementar-Speicher-Schaltkreis weist einen Feldeffekt-Transistor 4 auf, dessen Steuerelektrode mit einer Zeilenleitung (n) des XY-Teils 1 verbunden ist, und dessen einer Hauptanschluß an einer Spaltenleitung (m) des XY-Teils 1 liegt. Der weitere Hauptanschluß des Transistors 4 ist mit einem Bildpunkt-Speicherkondensator mit der Kapazität $C_{LC}$ beschaltet. Der weitere Anschlußpol des Kondensators $C_{LC}$ liegt auf Massepotential.

An der gemeinsamen Verbindung zwischen Transistor 4 und Bildpunkt-Speicherkondensator $C_{LC}$ kann ein zusätzlicher Kondensator mit der Kapazität $C_{OX}$ liegen, dessen weiterer Anschlußpol mit der weiteren, diesem Elementar-Speicher-Schaltkreis zugeordneten Zeilenleitung (n) verbunden ist. Dieser zusätzliche Kondensator $C_{OX}$ dient zur Stützung der Bildpunkt-Speicherkapazität $C_{LC}$, d.h. den Ladungsverlusten und Leckströmen, die während der Standzeit des Bildes auftreten, wird damit entgegen gewirkt.

Zwischen den einzelnen Spalten- und Zeilenleitungen des XY-Teils 1 treten jeweils an den Kreuzungspunkten Kreuzungskapazitäten $C_{CROSS}$ auf. Diese an sich parasitären Kreuzungskondensatoren $C_{CROSS}$ der Matrixleitungen werden als Zeilenspeicher verwendet. Hierdurch ergibt sich eine völlige Einsparung der üblicherweise (z.B. beim Gegenstand der US-PS 41 43 297) nötigen, gesonderten, externen Zeilenspeicher.

Die Kreuzungskapazitäten $C_{CROSS}$ werden nicht, wie üblich, absichtlich klein gehalten, sondern im Gegenteil so vergrößert, daß sie zusammengenommen (bzw. über die einzelnen Kreuzungspunkte aufaddiert) einen Kapazitätswert aufweisen, der mindestens 10-mal größer als die Bildpunktkapazität $C_{LC}$ ist. Auf diese Weise sind die Kreuzungskapazitäten nicht mehr störend, sondern sogar erwünscht bzw. für die Funktion der Schaltkreise erforderlich.

Die einzelnen Spaltenleitungen der Matrix 1 werden von Video-Schaltern 5 angesteuert. Schieberegister 2 und Video-Schalter 5 bilden zusammen einen Serien-Parallel-Wandler für das Video-Signal. Die einzelnen Video-Schalter 5 sind einerseits mit dem schnellen Horizontal-Schieberegister 2, andererseits mit einem Eingangskreis 6 verbunden. Dieser Eingangskreis 6 empfängt das Video-Signal sowie ein Taktsignal für die Standzeit des Bildes und steuert die Video-Schalter 5 in Abhängigkeit dieser Größen.

Das schnelle Horizontal-Schieberegister 2 wird dabei stufenweise von der Information mit einer Dauer für jede Stufe von beispielsweise $10^{-7}$ sec. und mit einer Gesamtzeit von bei-spielsweise 60 μsec durchlaufen. Es aktiviert seriell die Video-Schalter 5 und bewirkt somit eine Übertragung der Video-Information auf die als Zeilenspeicher fungierenden Kreuzungskapazitäten $C_{CROSS}$.

Die zeilenweise Ansteuerung der einzelnen Transistoren 4 erfolgt nun langsam mit Hilfe des Vertikal-Schieberegisters 3. Das langsame Vertikal-Schieberegister 3 benötigt zum vollen Durchgang beispielsweise $1/30$ Sekunden, für eine Stufe bei-spielsweise 60 μsec. und schaltet zeilenweise nacheinander die Transistoren 4 der Elementar-Schaltkreise ein.

Auf diese Weise, mit den Kreuzungskapazitäten $C_{CROSS}$ als Zeilenspeicher und mit den elementaren Bildpunkt-Kapazitäten $C_{LC}$ können die Bildpunkte mit gleichmäßiger Helligkeit für eine volle Durchlaufperiode von beispielsweise $^1$/30 Sekunden leuchten. Man erhält also mit dieser Adressiermethode ein nicht flackerndes, augenschonendes Bild.

Jede Zeilenleitung der Matrix 1 kann über seriengeschaltete Feldeffekt-Transistoren 8, 9 mit positiver oder negativer Spannung $U_+$ bzw. $U_-$ beaufschlagt werden, um die Transistoren 4 aufzusteuern bzw. zu sperren. Die Steueranschlüsse der Schalttransistoren 8,9 sind mit antivalenten Ausgängen des Vertikal-Schieberegisters 3 verbunden, während die Hauptanschlüsse der Transistoren 8,9 zum einen mit den Zeilenleitungen des XY-Teils 1, zum anderen mit den Spannungsquellen $U_+$ bzw. $U_-$ beschaltet sind.

Beim Einsatz von Flüssigkristallen als Bildpunkte wird der XY-Teil 1 der Matrix abwechselnd mit positiven und negativen Video-Signalen beaufschlagt. Die Umwandlung des Video-Signals vom positiven zum negativen Wert und umgekehrt erfolgt dabei taktweise in Abhängigkeit der Rahmenzeit (Standzeit eines Bildes) im Eingangskreis 6. Das Video-Signal wird über einen Inverter 10 einem Schalter 11 zugeleitet und liegt desweiteren an einem Schalter 12 direkt an. Die Schalter 11, 12 werden abwechselnd in Abhängigkeit des Rahmenzeit-Taktsignals mittels eines Taktgebers 13 geöffnet bzw. geschlossen.

Durch die abwechselnd positive und negative Beaufschlagung der Flüssigkristallanzeige mit Video-Signalen wird die Lebensdauer der Kristalle erhöht. Desweiteren wird vorteilhaft das bei Dünnfilm-Transistoren auftretende Driftproblem unwirksam gemacht, d.h. die durch unterschiedliche Transistor-Kenndaten (beispielsweise Schaltschwellspannung) der einzelnen Matrix-Transistoren hervorgerufene Verzerrung des Video-Signals wird eliminiert.

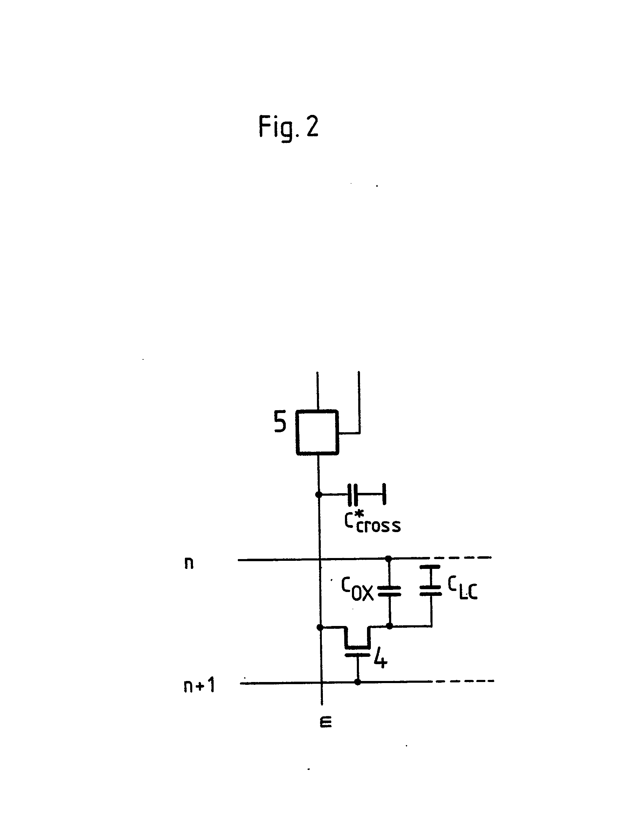

In Fig. 2 ist ein einzelner Elementar-Speicher-Schaltkreis zwischen den Zeilenleitungen n und n + 1 sowie der Spaltenleitung m des XY-Teils 1 dargestellt. Als Zeilenspeicher für die über den Video-Schalter 5 eingespeiste Video-Information steht die über die gesamten Zeilenleitungen aufsummierte Kreuzungskapazität $C^*_{CROSS}$ zur Verfügung. In vereinfachter Darstellung ist die rechte Elektrode des Kondensators $C^*_{CROSS}$ in Figur 2 mit Masse verbunden dargestellt.

Dieser Kondensator $C^*_{CROSS}$ dient zur Zwischenspeicherung der Video-Information, bis eine Ansteuerung der Steuerelektrode des Transistors 4 über die Zeile n + 1 erfolgt. Über den leitenden Transistor 4 erfolgt dann eine Umladung des Kreuzungskondensators $C^*_{CROSS}$ in den Bildpunkt-Kondensator $C_{LC}$. Der zwischen dem Bildpunkt-Kondensator $C_{LC}$ und der Zeilenleitung n angeordnete Kondensator $C_{OX}$ ist nicht zwingend erforderlich, stützt jedoch die Ladung des Bildpunkt-Kondensators $C_{LC}$ während der Standzeit des Bildes.

A n s p r ü c h e

1. Schaltungsanordnung zur Ansteuerung einer aus einem Raster von spannungserregbaren Kondensatoren als Bildpunkten aufgebauten Informationsanzeigeplatte, wobei jedem Bildpunkt die Video-Information durch Zeilen- und Spaltenleitungen zuführbar ist, mit einem horizontalen Serien-Parallel-Wandler für das Video-Signal zur Ansteuerung der Spaltenleitungen und einem vertikalen Schieberegister zur Ansteuerung der Zeilenleitungen, mit einem jedem Bildpunkt zugeordneten Feldeffekt-Transistor, dessen Steuerelektrode mit einer Zeilenleitung und dessen Hauptelektroden mit einer Spaltenleitung bzw. dem Bildpunkt-Kondensator verbunden sind, dadurch gekennzeichnet, daß die Ausgänge des horizontalen Serien-Parallel-Wandlers (2, 5) für das Video-Signal direkt mit den Spaltenleitungen (m) verbunden sind und daß die Zwischenspeicherung der Video-Informationen einer Zeile mittels der an jedem Kreuzungspunkt von Zeilen- und Spaltenleitung (n, m) vorhandenen Kreuzungskapazität ($C_{CROSS}$) erfolgt.

2. Schaltungsanordnung nach Anspruch 1, dadurch gekennzeichnet, daß die Kreuzungskapazitäten ($C_{CROSS}$) einen Kapazitätswert aufweisen, der ungefähr dem 10-fachen einer Bildpunkt-Kapazität ($C_{LC}$) entspricht.

3. Schaltungsanordnung nach Anspruch 1 oder 2, dadurch gekennzeichnet, daß vor dem Serien-Parallel-Wandler (2, 5) ein Eingangskreis (6) vorgeschaltet ist, der taktweise die Polarität des Video-Signals wechselt.

4. Schaltungsanordnung nach einem oder mehreren der vorstehenden Ansprüche, dadurch gekennzeichnet, daß eine zusätzliche Kapazität ($C_{OX}$) zwischen Bildpunkt-Kondensator ($C_{LC}$) und zugeordneter Zeilenleitung (n) angeordnet ist.

5. Schaltungsanordnung nach wenigstens einem der Ansprüche 1 bis 4, dadurch gekennzeichnet, daß Transistor-Schalter (8, 9) vorgesehen sind, die den Zeilenleitungen (n) fortlaufend zeilenweise Schalt- bzw. Sperrspannung für die jedem Bildpunkt zugeordneten Transistoren (4) zuführen.

6. Schaltungsanordnung nach Anspruch 5, dadurch gekennzeichnet, daß der Transistor-Schalter aus zwei in Serie liegenden Feldeffekt-Transistoren (8, 9) besteht, deren freie Hauptelektroden an Plus- bzw. Minusspannung ($U_+$, $U_-$) liegen, deren miteinander verbundene Hauptelektroden mit je einer Zeilenleitung (n) und deren Steuerelektroden mit antivalenten Ausgängen des vertikalen Schieberegisters (3) verbunden sind.

Fig.1

Fig. 2

$C^*_{cross}$

n

$C_{OX}$    $C_{LC}$

4

n+1

E

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 3 537 071 (WEIMAR) <br><br> * Spalte 1, Zeilen 51-59; Spalte 6, Zeile 70 bis Spalte 7, Zeile 8; Spalte 8, Zeilen 20-28 * <br><br> -- | 1 |
| | US - A - 4 100 579 (ERNSTOFF) <br><br> * Spalte 7, Zeile 40 bis Spalte 8, Zeile 8 * <br><br> -- | 3 |
| | FEINWERKTECHNIK UND MESSTECHNIK, Band 87, Nr. 2, März 1979, München, DE, KOGER et al.: "Moderne Bildtechniken", Seiten 53-59 <br><br> * Seite 53, rechte Spalte, Zeile 10 bis Seite 54, rechte Spalte, Zeile 18 * <br><br> -- | 4,5 |
| | DE - A - 2 054 779 (RCA) <br><br> * Seite 7, Zeile 9 bis Seite 10, Zeile 15 * <br><br> -- | 6 |
| A | COMPUTER DESIGN, Band 13, Nr. 3, März 1974, Concord, MA, US, "Liquid crystal pictorial display", Seite 42 <br><br> * Das ganze Dokument * <br><br> ---- | 1 |

**KLASSIFIKATION DER ANMELDUNG (Int.Cl. 3)**

H 04 N 3/14
G 02 F 1/133

**RECHERCHIERTE SACHGEBIETE (Int. Cl. 3)**

H 04 N 3/14
        3/12
G 02 F 1/133
G 06 F 3/14

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 17-07-1980 | CRISTOL |

EPA form 1503.1   06.78